# EUROPÄISCHE PATENTSCHRIFT

(11) **EP 2 470 345 B1**
(45) Veröffentlichungstag und Bekanntmachung des Hinweises auf die Patenterteilung: **13.08.2014**
(21) Anmeldenummer: 10732653.0
(22) Anmeldetag: 30.06.2010
(51) Int. Cl.: B29C 45/14, B29K 705/00, B29K 705/02

(54) **VERFAHREN ZUM HERSTELLEN EINES VERBUNDBAUTEILS**
METHOD FOR PRODUCING A COMPOSITE COMPONENT
PROCÉDÉ DE PRODUCTION D'UN COMPOSANT COMPOSITE

(30) Priorität: 27.08.2009 DE 102009039081
(43) Veröffentlichungstag der Anmeldung: 04.07.2012
(73) Patentinhaber: Daimler AG, 70327 Stuttgart (DE)
(72) Erfinder: DUDZIAK, Kai-Uwe, 21435 Stelle (DE); FALKE, Jürgen, 25462 Rellingen (DE); REESE, Eckhard, 21641 Apensen (DE)
(74) Vertreter: JENSEN & SON
(86) Internationale Anmeldenummer: PCT/EP2010/003961
(87) Internationale Veröffentlichungsnummer: WO 2011/023258

(56) Entgegenhaltungen:
- WO-A1-2008/067901
- WO-A1-2008/125233
- WO-A1-2009/077026

## Beschreibung

Die Erfindung betrifft ein Verfahren zum Herstellen eines Verbundbauteils nach dem Oberbegriff von Patentanspruch 1.

Die WO 2008/125233 A1 offenbart ein Verfahren zum Herstellen eines Verbundbauteils bei welchem ein Hohlprofil durch Innenhochdruck aufgeweitet und gleichzeitig in einem Ausbauchbereich mit Kunststoffmasse umspritzt wird. Durch das gleichzeitige Aufweiten und Umspritzen soll dabei ein verbesserter Formschluss hergestellt werden.

Bei an sich bekannten Polymer-Hybridbauteilen, die als Kombination aus einem Spritzguss- und einem innenhochdruckumgeformten Metallbauteil ausgeführt sind, wird die Verbundhaftung zwischen den beiden Komponenten des Bauteils in der Regel durch einen Haftvermittler oder durch Formschluss zwischen den beiden Komponenten hergestellt. Die Fixierung der beiden Komponenten gegeneinander ist jedoch trotz dieser Maßnahmen oftmals ungenügend. Insbesondere bei formschlüssig verbundenen Hybridbauteilen gelingt es oftmals nicht, einen hinreichend haltgebenden Formschluss zu erzeugen.

Aus der WO 2008/067901 ist ebenfalls ein Verfahren zum Herstellen eines Verbundbauteils bekannt, bei welchem ein Hohlprofil durch Innenhochdruck in eine Kavität, in der das Hohlprofil umspritzt werden soll, aufgeweitet wird. Anschließend wird das so ausgeformte Hohlprofil mittels einer Kunststoffmasse umspritzt, wodurch der Kunststoff mit dem Hohlprofil in diesem Bereich eine formschlüssige Verbindung eingeht.

Zudem ist aus der DE 100 14 332 C2 ein mit einem Innenhochdruckumformprozess kombiniertes Spritzgießverfahren entnehmbar. Zuerst wird das Hohlprofil mittels Innenhochdruck in seine endgültige Form gebracht, wonach an dieses Kunststoffelemente angespritzt werden. Während des Anspritzens wird innerhalb des Hohlprofils ein fluidischer Stützdruck erzeugt, damit das Hohlprofil infolge des von außen einwirkenden Gießdruckes nicht kollabiert.

Der vorliegenden Erfindung liegt also die Aufgabe zugrunde, ein Verfahren der eingangs genannten Art so weiter zu entwickeln, dass die Verbundhaftung in einem Verbundbauteil aus einem Innenhochdruck ausgeweiteten Hohlprofil und einem Kunststoffanteil verbessert wird.

Diese Aufgabe wird durch ein Verfahren mit den Merkmalen des Patentanspruchs 1 gelöst.

Bei einem derartigen Verfahren wird in einem ersten Schritt ein Bereich eines Hohlprofils so weit aufgeweitet, bis dieser in Anlage an einen Kantenbereich einer Angußkavität eines kombinierten Innenhochdruckumform- und Spritzgusswerkzeuges kommt. In einem zweiten Schritt des Verfahrens wird diese noch freie Angußkavität mit einer Spritzgießmasse befüllt. Erfindungsgemäß ist vorgesehen, dass nach rollständigem Befüllen der Angußkavität in einem dritten Schritt das Hohlprofil im Bereich der Angußkavität zumindest bereichsweise unter Erhöhung des Innenhochdrucks weiter aufgeweitet wird. Bei dieser Aufweitung stellt sich eine Freiform ein, deren Gestalt von der Druckdifferenz zwischen Innenhochdruck und Spritzgießdruck sowie der Temperatur des Spritzgusses und den Schubspannungen, die der eingespritzte Kunststoff durch Fließkontakt an der Hohlprofiloberfläche auslöst, abhängt. Durch die Freiform werden besonders große Hinterschneidungen erzielt, so dass der angespritzte Kunststoff sich am Hohlprofil besonders gut verklammern kann und somit einen völlig rutschfesten und unlösbaren Halt am Hohlprofil erhält und daher die Verbundhaftung wesentlich verbessert wird. Zusätzliche Halt gebende Mittel wie Kleber oder andere Haftvermittler sowie mechanisch wirkende Befestigungselemente können entfallen.

Gleichzeitig lassen sich aufgrund der Temperatur der Spritzgießmasse und der während des dritten Schrittes durch die teigige oder flüssige Spritzgießmasse auf das Hohlprofil einwirkenden Schubspannungen, die zu einer Erhöhung der Fließgrenze des Hohlprofilmaterials führen, besonders hohe Umformgrade erzielen.

Während des Aufweitens des Hohlprofils im dritten Schritt des Verfahrens wird weiterhin ein Ventil, beispielsweise in Form eines Nadelverschlusses, wenigstens eines Austrittskanals der Angußkavität geöffnet, so dass durch die Aufweitung des Hohlprofils verdrängte Spritzgießmasse aus der Angußkavität austreten kann. Hierdurch wird gewährleistet, dass während des zusätzlichen Aufweitens im dritten Schritt des Verfahrens die überflüssige Spritzgießmasse zu unkontrollierten Überspritzungen am Bauteil führt.

Des Weiteren sind der Ort und die Anzahl der Austrittkanäle ebenfalls für die Gestalt bzw. Kontur der Freiform von größerer Bedeutung, so dass bei geöffnetem Ventil eine besonders starke Oberflächenveränderung des Hohlprofils beispielsweise in einer Wellen- oder Kuppenform erzeugt wird, welche eben von der Anzahl und der Form der Kanäle abhängig ist. Bei der Kuppenform wird ein allseitiger Formschluss erreicht, was den Kunststoff auch drehfest auf dem Hohlprofil festsetzt.

In weiterer Ausgestaltung der Erfindung wird die Spritzgießmasse vorzugsweise bei einer Temperatur von 200°C bis 400°C in die Angußkavität eingefüllt. Das Hohlprofil, das vorteilhafter Weise aus Leichtbaugründen Aluminium sein kann, nimmt diese Temperatur ebenfalls an. Da der Werkstoff Aluminium in diesem Temperaturbereich eine höhere Umformbarkeit aufweist, können nun beim Umformen dieser Aluminiumhohlprofile viel höhere Umformgrade erzielt werden. Vorteilhafter Weise wird während des dritten Schritts des Verfahrens zudem eine vorgegebene Druckdifferenz zwischen Innenhochdruck und einem Druck der Spritzgießmasse eingestellt, um so die Schubspannungen im umzuformenden Hohlprofil besonders gut zu kontrollieren und somit ebenfalls positiven Einfluss auf das Fließverhalten des Materials des Hohlprofils zu nehmen.

In weiterer Ausgestaltung der Erfindung wird das Aufweiten des Hohlprofils im dritten Schritt beendet, wenn ein vorgegebenes Restvolumen von Spritzgießmasse in der Angußkavität erreicht ist. Dies ermöglicht eine besonders einfache Kontrolle des Verfahrensfortschritts durch Messung des Volumens des durch das geöffnete Ventil austretenden Kunststoffes.

In einer weiteren Ausführungsform der Erfindung wird in einem vierten Schritt des Verfahrens das Ventil geschlossen und der Innenhochdruck des Hohlprofils weiter erhöht. Hierdurch kann eine zusätzliche Kalibrierung des Hybridbauteiles und damit eine Verbesserung der Materialqualität und der Verbundhaftung erzielt werden.

Die Temperatur des Spritzgießwerkzeuges wird während des gesamten Aufweitens des Hohlprofils im Wesentlichen konstant gehalten, um eine möglichst geringe Abkühlung der Spritzgießmasse zu erreichen, damit gleichfalls deren Temperatur konstant zu halten und so die gewünschten Effekte auf die Fließgrenze des Materials des Hohlprofils während des gesamten Umformprozesses aufrecht zu erhalten.

Bevorzugt wird bei einer Durchführung des Verfahrens ein Hohlprofil aus einem umformbaren Nichteisenmetall, vorzugsweise Aluminium oder einer Aluminiumbasislegierung verwendet. Gerade bei der Verwendung von Aluminium- oder Aluminiumbasislegierungen werden die genannten Effekte auf die Umformbarkeit durch Temperatur, Schubspannungen und Gegendruck besonders deutlich bemerkbar, so dass auch bei Aluminium, welches an sich geringe Streckgrenzen aufweist, wesentlich größere Umformgrade und damit ein besserer Formschluss zwischen Hohlprofil und Kunststoffanteil erzielt werden kann. Beim Aufweiten des Hohlprofils wird dabei eine maximale Durchmesserzunahme von 10% bis 15% und insbesondere von 15% bis 35% erzielt. Dies übersteigt die für Aluminium üblichen Umformgrade von 12% bis 15% ganz wesentlich, so dass sich auch große Hinterschneidungen zwischen Metall- und Kunststoffanteil erzielen lassen.

Im Folgenden soll die Erfindung und ihre Ausführungsformen anhand der Zeichnung näher erläutert werden. Hierbei zeigen:
- Fig. 1: eine schematische Schnittdarstellung durch ein kombiniertes Innenhochdruckumform- und Spritzgusswerkzeug mit eingelegtem Hohlprofil zur Durchführung einer Variante des erfindungsgemäßen Verfahrens,
- Fig. 2: Werkzeug und Hohlprofil aus Fig. 1 nach dem ersten Verfahrensschritt und
- Fig. 3: Werkzeug und Hohlprofil während des dritten Verfahrensschrittes.

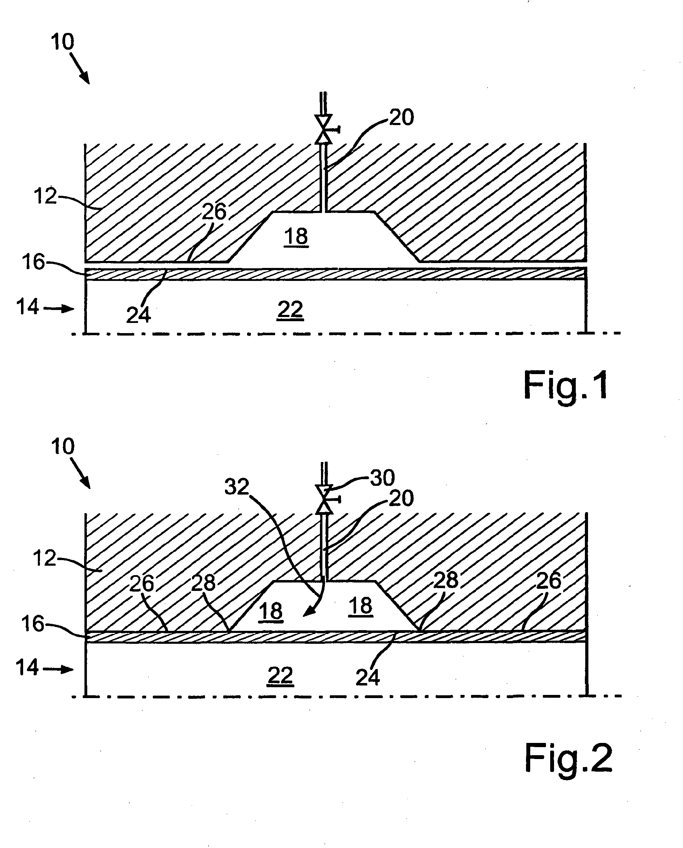

Ein im Ganzen mit 10 bezeichnetes, kombiniertes Spritzguss- und Innenhochdruckumfomwerkzeug, von dem in Fig. 1 eine Hälfte des Werkzeugteilbereiches 12 abgebildet ist, umfasst eine zentrale Kavität 14 zur Aufnahme eines Hohlprofils 16 sowie eine Angusskavität 18 in welche durch eine Angussleitung 20 eine Spritzgussmasse, insbesondere ein Kunststoff eingefüllt werden kann.

Fig. 1 zeigt das Werkzeug 10 mit dem Hohlprofil 16 vor dem Beginn der Verfahrensdurchführung. Zur Herstellung des Verbundbauteils wird zunächst der innere Hohlraum 22 des Hohlprofils 16 mit einem Druck beaufschlagt, wodurch sich das Hohlprofil 16 aufweitet, bis dessen Außenwandung 24 in Anlage an die Wandung 26 der Kavität 14 des Werkzeuges 10 kommt, ggf. sich auch noch geringfügig in **die Angußkavität** 18 hinein aufweitet.

Insbesondere wird dadurch, wie in Fig. 2 ersichtlich, der Kantenbereich 28 der Angusskavität 18 in Kontakt mit der Außenwandung 24 des Hohlprofils 16 gebracht. Sobald die Außenwandung 24 in Anlage an den Kantenbereich 28 gekommen ist, wird das Ventil 30 in der Angussleitung 20 geöffnet und Spritzgussmasse in Richtung des Pfeils 32 in die Angusskavität 18 eingefüllt. Die Spritzgussmasse hat zu diesem Zeitpunkt eine Temperatur zwischen 200°C und 400°C. Bei der Durchführung des Verfahrens wird sowohl der Innenhochdruck im inneren Hohlraum des Hohlprofils 16, als auch der Druck der Spritzgussmasse in der Angusskavität 18 kontrolliert, so dass sich ein vorgegebener Druckverlauf über das Hohlprofil 16 einstellt.

Durch die beim Einströmen der Spritzgussmasse in die Angusskavität 18 auf die Außenwandung 14 des Hohlprofils 16 ausgeübten Schubspannungen, die beiderseits der Außenwandung 24 wirkenden Drücke und die hohe Temperatur der Spritzgussmasse in der Angusskavität 18 werden die Fließspannungen und somit das Fließverhalten des Materials des Hohlprofils 16, so dass zu diesem Zeitpunkt des Verfahrens wesentlich höhere Umformgrade am Hohlprofil 16 möglich werden.

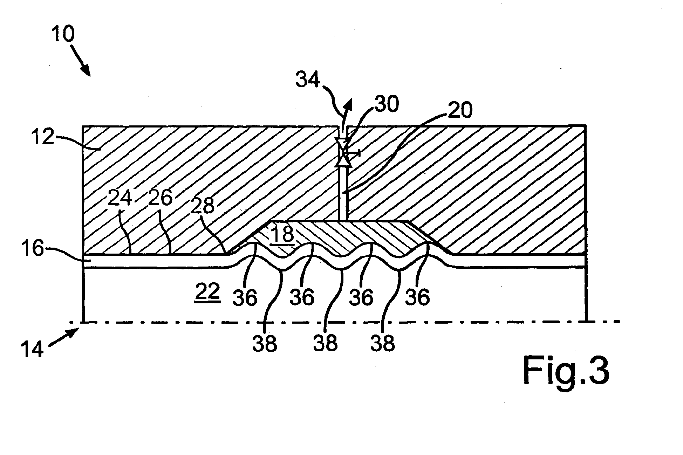

Dies wird im nächsten Verfahrensschritt ausgenutzt, wie in Fig. 3 zu erkennen. Nach vollständigem Befüllen der Angusskavität 18 mit Spritzgießmasse wird nun der Innenhochdruck im inneren Hohlraum 22 des Hohlprofils 16 weiter erhöht, wobei das Ventil 30 geöffnet bleibt. Im Bereich der Angusskavität 18 wird die Außenwandung 24 des Hohlprofils 16 weiter aufgeweitet, wobei Spritzgießmasse aus der Angußkavität 18 in Richtung des Pfeiles 34 verdrängt wird.

Da die Außenwandung 24 des Hohlprofils 16 im Bereich der Angusskavität 18 nicht durch die Wandung 26 des Spritzgusswerkzeuges 10 zurückgehalten wird, ergibt sich in diesem Bereich eine ungleichmäßige Aufweitung des Hohlprofils 16, wie in Fig. 3 zu erkennen. Insbesondere bildet sich eine wellenförmige Struktur mit Wellenbergen 36 und Tälern 38, die zumeist ungleichmäßig ist. Hierdurch ergibt sich ein besonders haltbarer Formschluss zwischen dem Spritzgussmaterial in der Angusskavität 18 und dem Hohlprofil 16 in Längserstreckungsrichtung des Hohlprofils 16. Gegebenenfalls kann in einem nächsten Verfahrensschritt das Ventil 30 geschlossen werden, so dass keine weitere Verdrängung von Kunststoff aus der Angusskavität 18 mehr erfolgen kann. Bei weiterer Druckerhöhung im inneren Hohlraum 22 des Hohlprofils 16 kommt es nun zu einem so genannten Kalibrieren des Teiles, was den Formschluss und die Verbundhaftung zwischen dem Hohlprofil 16 und dem Kunststoff in der Angusskavität 18 weiter verbessert.

## Patentansprüche

1. Verfahren zum Herstellen eines Verbundbauteils, bei welchem ein Hohlprofil (16) durch Innenhochdruck zumindest bereichsweise aufgeweitet wird, wobei in einem ersten Schritt ein Bereich des Hohlprofils (16) so weit aufgeweitet wird, bis dieser in Anlage an einen Kantenbereich (28) einer Angußkavität (18) eines kombinierten Innenhochdruckumform- und Spritzgusswerkzeugs kommt, und in einem zweiten Schritt die noch freie Angußkavität (18) mit einer Spritzgießmasse befüllt wird, **dadurch gekennzeichnet, dass**
nach vollständigem Befüllen der Angußkavität (18) in einem dritten Schritt das Hohlprofil (16) im Bereich der Angußkavität (18), in der sich die Spritzgußmasse noch in teigigem oder flüssigen Zustand befindet, zumindest bereichsweise unter Erhöhung des Innenhochdrucks weiter aufgeweitet wird, wobei während des Aufweitens im dritten Schritt ein Ventil (30) wenigstens eines Austrittskanals (20) der Angußkavität (18) geöffnet ist, so dass durch die Aufweitung des Hohlprofils (10) verdrängte Spritzgießmasse aus der Angußkavität (18) austreten kann.

2. Verfahren nach Anspruch 1,
**dadurch gekennzeichnet, dass**
die Spritzgießmasse bei einer Temperatur von 200°C bis 400°C in die Angußkavität (18) gefüllt wird.

3. Verfahren nach Anspruch 1 oder 2,
**dadurch gekennzeichnet, dass**
im dritten Schritt eine vorgegebene Druckdifferenz zwischen Innenhochdruck und einem Druck der Spritzgießmasse eingestellt wird.

4. Verfahren nach einem der Ansprüche 1 bis 3,
**dadurch gekennzeichnet, dass**
das Aufweiten des Hohlprofils (16) im dritten Schritt beendet wird, wenn ein vorgegebenes Restvolumen von Spritzgießmasse in der Angußkavität (18) erreicht ist.

5. Verfahren nach einem der Ansprüche 1 bis 4,
**dadurch gekennzeichnet, dass**
in einem vierten Schritt das Ventil (30) geschlossen und der Innenhochdruck des Hohlprofils (16) weiter erhöht wird.

6. Verfahren nach einem der Ansprüche 1 bis 5,
**dadurch gekennzeichnet, dass**
die Temperatur der Spritzgießmasse während des gesamten Aufweitens des Hohlprofils (16) im Wesentlichen konstant gehalten wird.

7. Verfahren nach einem der Ansprüche 1 bis 6,
**dadurch gekennzeichnet, dass**
ein Hohlprofil (16) aus umformbarem Nichteisenmetall verwendet wird

8. Verfahren nach Anspruch 7,
**dadurch gekennzeichnet, dass**
das Nichteisenmetall Aluminium oder eine Aluminiumbasislegierung ist.

9. Verfahren nach einem der Ansprüche 1 bis 8,
**dadurch gekennzeichnet, dass**
beim Aufweiten des Hohlprofils (16) eine maximale Durchmesserzunahme von 10 % bis 25 % und insbesondere von 15% bis 35% erzielt wird.

## Claims

1. Method for producing a composite component, wherein at least regions of a hollow profile (16) are expanded by hydroforming, wherein, in a first step, a region of the hollow profile (16) is expanded until it comes into contact with an edge region (28) of a sprue cavity (18) of a combined hydroforming and injection moulding tool, and wherein, in a second step, the still free sprue cavity (18) is filled with an injection moulding material,
**characterised in that**
following the complete filling of the sprue cavity (18), at least regions of the hollow profile (16) are, in a third step, expanded further while increasing the hydroforming pressure in the region of the sprue cavity (18), where the injection moulding material is still in a pasty or liquid state, wherein, during the expansion process in the third step, a valve (30) of at least one discharge passage (20) of the sprue cavity (18) is opened, allowing the injection moulding material displaced by the expansion of the hollow profile (10) to be discharged from the sprue cavity (18).

2. Method according to claim 1,
**characterised in that**
the injection moulding material is introduced into the sprue cavity (18) at a temperature of 200°C to 400°C.

3. Method according to claim 1 or 2,
**characterised in that**
in the third step, a preset pressure differential is adjusted between the hydroforming pressure and a pressure of the injection moulding material.

4. Method according to any of claims 1 to 3,
**characterised in that**
in the third step, the expansion of the hollow profile (16) is completed when a preset residual volume of injection moulding material is reached in the sprue cavity (18).

5. Method according to any of claims 1 to 4,
**characterised in that**
in a fourth step, the valve (30) is closed and the hydroforming pressure of the hollow profile (16) is increased further.

6. Method according to any of claims 1 to 5,
**characterised in that**
the temperature of the injection moulding compound is held substantially constant during the whole expansion process of the hollow profile (16).

7. Method according to any of claims 1 to 6,
**characterised in that**
a hollow profile (16) made of a workable non-ferrous metal is used.

8. Method according to claim 7,
**characterised in that**
the non-ferrous metal is aluminium or an aluminium alloy.

9. Method according to any of claims 1 to 8,
**characterised in that**
a maximum diameter increase of 10% to 25% and in particular of 15% to 35% is achieved in the expansion process of the hollow profile (16).

## Revendications

1. Procédé de production d'un composant composite, selon lequel un profilé creux (16) est élargi au moins par sections par une haute pression interne, dans une première étape, une zone du profilé creux (16) étant élargie jusqu'à ce qu'elle vienne en contact avec une zone arête (28) d'une cavité de coulée (18) d'un outil combiné de formage sous haute pression interne et de coulée sous pression, dans une deuxième étape, la cavité de coulée (18) encore libre étant remplie d'une matière de moulage par injection, **caractérisé en ce qu'**après le remplissage complet de la cavité (18), dans une troisième étape, le profilé creux (16) dans la zone de la cavité de coulée (18) dans laquelle la matière à mouler par injection se trouve encore à l'état liquide ou à l'état pâteux, est élargi au moins par sections par augmentation de la haute pression interne, pendant l'élargissement dans une troisième étape, une valve (30) d'au moins un canal d'évacuation (20) de la cavité de coulée (18) étant ouvert, de manière qu'à travers l'élargissement du profilé creux (10) la matière à mouler par injection puisse sortir de la cavité de coulée (18).

2. Procédé selon la revendication 1, **caractérisé en ce que** la matière à mouler par injection est remplie à une température comprise entre 200°C et 400°C dans la cavité de coulée (18).

3. Procédé selon la revendication 1 ou 2, **caractérisé en ce que** dans une troisième étape une différence de pression déterminée entre la haute pression interne et une pression de la matière à mouler par injection est réglée.

4. Procédé selon l'une quelconque des revendications 1 à 3, **caractérisé en ce que** l'élargissement du profilé creux (16) est achevé à la troisième étape, lorsqu'un volume résiduel déterminé de la matière à coulée par injection est atteint dans la cavité de coulée (18).

5. Procédé selon l'une quelconque des revendications précédentes 1 à 4, **caractérisé en ce qu'**à une quatrième étape la soupape (30) est fermée et la haute pression interne du profilé creux 16) est encore augmentée.

6. Procédé selon l'une quelconque des revendications 1 à 5, **caractérisé en ce que** la température de la matière à coulée par injection est maintenue essentiellement constante pendant toute la durée de l'élargissement du profilé creux (16)

7. Procédé selon l'une quelconque des revendications 1 à 6, **caractérisé en ce qu'**un profilé creux (16) en métal non ferreux façonnable.

8. Procédé selon la revendication 7, **caractérisé en ce que** le métal non ferreux est de l'aluminium ou un alliage à base d'aluminium.

9. Procédé selon l'une quelconque des revendications 1 à 8, **caractérisé en ce que**, lorsque le profilé creux (16) est élargi, on obtient une augmentation du diamètre maximale comprise entre 10 % et 25 % et en particulier entre 15 % et 35 %.
